(19) Europäisches Patentamt
European Patent Office
Office européen des brevets

(11) **EP 2 974 467 B1**

(12) **EUROPEAN PATENT SPECIFICATION**

(45) Date of publication and mention
of the grant of the patent:
**18.04.2018 Bulletin 2018/16**

(51) Int Cl.:
***H04W 48/20*** (2009.01)

(21) Application number: **14719403.9**

(22) Date of filing: **10.03.2014**

(86) International application number:
**PCT/US2014/022563**

(87) International publication number:
**WO 2014/159217 (02.10.2014 Gazette 2014/40)**

(54) **CELL RESELECTION WITH PERFORMANCE-BASED SUITABILITY CRITERION**

ZELLENNEUAUSWAHL MIT LEISTUNGSBASIERTEM EIGNUNGSKRITERIUM

RESÉLECTION DE CELLULE SELON UN CRITÈRE D'ADÉQUATION BASÉ SUR DES PERFORMANCES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.03.2013 US 201313826474**

(43) Date of publication of application:
**20.01.2016 Bulletin 2016/03**

(73) Proprietor: **Qualcomm Incorporated**
**San Diego, CA 92121-1714 (US)**

(72) Inventors:
• **WANG, Fan**
**San Diego, CA 92121-1714 (US)**

• **HU, An-Swol, Clement**
**San Diego, CA 92121-1714 (US)**
• **ZHANG, Wei**
**San Diego, CA 92121-1714 (US)**
• **MAKH, Vansh Pal, Singh**
**San Diego, CA 92121-1714 (US)**

(74) Representative: **Dunlop, Hugh Christopher et al**
**Maucher Jenkins**
**26 Caxton Street**
**London SW1H 0RJ (GB)**

(56) References cited:
**EP-A- 2 302 970**      **EP-A1- 2 547 012**
**WO-A2-98/33288**      **US-A1- 2007 173 254**
**US-B1- 6 195 551**

**Description**

**BACKGROUND**

**I. Field**

The present disclosure relates generally to communication, and more specifically to techniques for performing cell reselection in a wireless communication system.

**II. Background**

Wireles communication systems are widely deployed to provide various communication content such as voice, video, packet data, messaging, broadcast, etc. These wireless systems may be multiple-access systems capable of supporting multiple users by sharing the available system resources. Examples of such multiple-access systems include Code Division Multiple Access (CDMA) systems, Time Division Multiple Access (TDMA) systems, Frequency Division Multiple Access (FDMA) systems, Orthogonal FDMA (OFDMA) systems, and Single-Carrier FDMA (SC- FDMA) systems.
A wireless communication system may include a number of cells, where the term "cell" can refer to a coverage area of a base station and/or a base station subsystem serving the coverage area. A user equipment (UE) may communicate with a cell via the downlink and uplink. The downlink (or forward link) refers to the communication link from the cell to the UE, and the uplink (or reverse link) refers to the communication link from the UE to the cell.
A UE that has just powered on or has lost coverage may search for suitable cells from which the UE can receive communication service. If a suitable cell is found, then the UE may perform registration with a wireless system via the cell, if necessary. The UE may then "camp" on the cell if the UE is in an idle mode and not actively communicating with the cell. Camping is a process in which the UE monitors a cell for system information and paging information. The cell on which the UE is camped is referred to as a serving cell.
The UE may be within the coverage of multiple cells in one or more wireless systems. The UE may camp on or communicate with the serving cell and may periodically make measurements for other cells in order to detect more suitable cells that can serve the UE. If a more suitable cell is found, then the UE may perform cell reselection to this cell. In wireless communication, "cell reselection" typically refers to selection of another cell to serve the UE whereas "cell selection" typically refers to selection of an initial cell to serve the UE. Cell reselection may be initiated by the UE when it is operating in the idle mode or by the wireless system when the UE is operating in a connected mode. It may be desirable to perform cell reselection in an efficient manner in order to obtain good performance for the UE.
US6195551B1 describes a method for controlling an idle handoff in a cellular communication system.
EP2302970A1 describes a method for evaluating for a user equipment the suitability of a cell in a network.

**SUMMARY**

The invention relates to a method, an apparatus and a computer program product for performing cell reselection as set forth in the appended claims.

**BRIEF DESCRIPTION OF THE DRAWINGS**

FIG. 1 shows a wireless communication system.
FIG. 2 shows the format of the PICH.
FIG. 3 shows a process for performing cell reselection.
FIG. 4 shows a block diagram of a design of a base station and a UE.
FIG. 5 shows a block diagram of another design of a base station and a UE.

**DETAILED DESCRIPTION**

The techniques described herein may be used for various wireless communication systems such as CDMA, TDMA, FDMA, OFDMA, SC-FDMA and other wireless systems. The terms "system" and "network" are often used interchangeably. A CDMA system may implement a radio technology such as Universal Terrestrial Radio Access (UTRA), cdma2000, etc. UTRA includes Wideband CDMA (WCDMA), Time Division Synchronous CDMA (TD-SCDMA), and other variants of CDMA. cdma2000 includes IS-2000, IS-95 and IS-856 standards. A TDMA system may implement a radio technology such as Global System for Mobile Communications (GSM). An OFDMA system may implement a radio technology such as Evolved UTRA (E-UTRA), Ultra Mobile Broadband (UMB), IEEE 802.11 (Wi-Fi and Wi-Fi Direct), IEEE 802.16 (WiMAX), IEEE 802.20, Flash-OFDM®, etc. UTRA, E-UTRA, and GSM are part of Universal Mobile Telecommunication System (UMTS). 3GPP Long Term Evolution (LTE) and LTE-Advanced (LTE-A), in both frequency division duplexing (FDD) and time division duplexing (TDD), are recent releases of UMTS that use E-UTRA, which employs OFDMA on the downlink and SC-FDMA on the uplink. UTRA, E-UTRA, GSM, UMTS, LTE and LTE-A are described in documents from an organization named "3rd Generation Partnership Project" (3GPP). cdma2000 and UMB are described in documents from an organization named "3rd Generation Partnership Project 2" (3GPP2). The techniques described herein may be used for the wireless systems and radio technologies mentioned above as well as other wireless systems and radio technologies. For clarity, certain aspects of the techniques are described below for WCDMA, and WCDMA terminology is used in much of the description below.

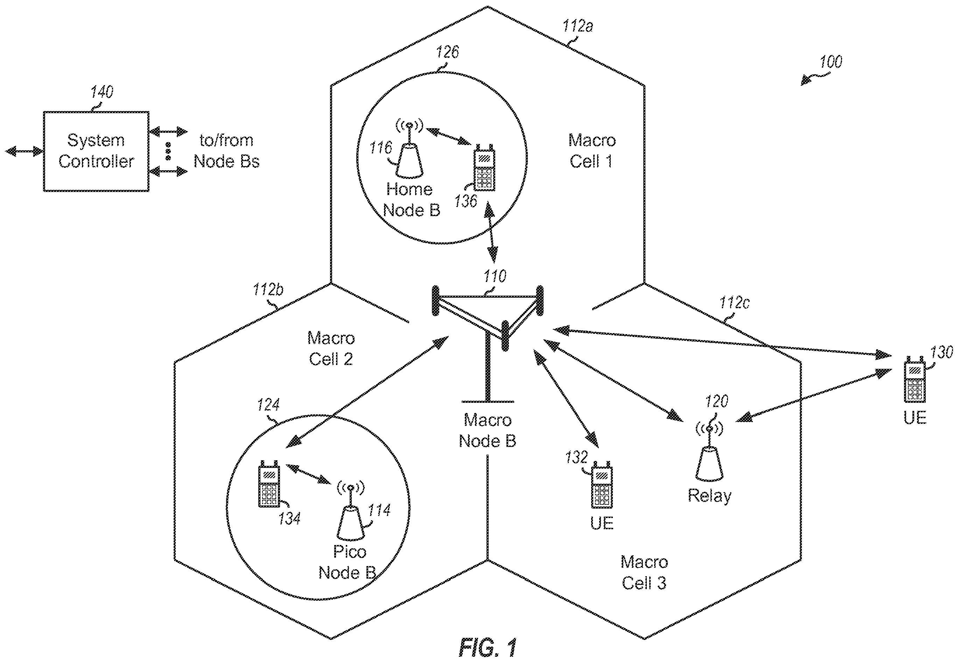

**FIG. 1** shows a wireless communication system 100, which may be a WCDMA system or some other wireless system. Wireless system 100 may include a number of Node Bs 110, 114 and 116 and other network entities. A Node B may be an entity that can communicate with UEs and relays and may also be referred to as a base station, an evolved Node B (eNB), an access point, etc. A Node B may provide communication coverage for a particular geographic area and may support communication for the UEs located within the coverage area. To improve system capacity, the overall coverage area of a Node B may be partitioned into multiple (e.g., three) smaller areas. Each smaller area may be served by a respective Node B subsystem. In 3GPP, the term "cell" can refer to a coverage area of a Node B and/or a Node B subsystem serving this coverage area. A Node B may support one or multiple (e.g., three) cells.

A Node B may provide communication coverage for a macro cell, a pico cell, a femto cell, and/or a cell of some other type. A macro cell may cover a relatively large geographic area (e.g., several kilometers in radius) and may allow unrestricted access by UEs with service subscription. A pico cell may cover a relatively small geographic area and may allow unrestricted access by UEs with service subscription. A femto cell may cover a relatively small geographic area (e.g., a home, an apartment, a shop, etc.) and may allow restricted access by UEs having association with the femto cell (e.g., UEs in a Closed Subscriber Group (CSG)). A femto cell may also be referred to as a CSG cell. In the example shown in FIG. 1, wireless system 100 includes a macro Node B 110 for three macro cells 112a, 112b and 112c, a pico Node B 114 for a pico cell 124, and a home Node B 116 for a femto cell 126. A system controller 140 may couple to a set of Node Bs and may provide coordination and control for these Node Bs.

Wireless system 100 may also include relays. A relay may be an entity that can receive a transmission of data and/or other information from an upstream station (e.g., a Node B or a UE) and send a transmission of the data and/or other information to a downstream station (e.g., a UE or a Node B). A relay may also be a UE that can relay transmissions for other UEs. In FIG. 1, a relay 120 may communicate with Node B 110 and UE 130 in order to facilitate communication between Node B 110 and UE 130.

UEs 130 to 136 may be dispersed throughout the wireless system, and each UE may be stationary or mobile. A UE may also be referred to as a mobile station, a terminal, an access terminal, a subscriber unit, a station, etc. A UE may be a cellular phone, a smartphone, a tablet, a wireless communication device, a personal digital assistant (PDA), a wireless modem, a handheld device, a laptop computer, a cordless phone, a wireless local loop (WLL) station, a netbook, a smartbook, etc. A UE may be able to communicate with Node Bs, relays, other UEs, etc.

Upon power up, a UE may search for wireless systems from which the UE can receive communication services. If at least one wireless system is detected, then one wireless system may be selected to serve the UE and may be referred to as a serving system. The UE may perform registration with the serving system, if necessary. The UE may then operate in a connected mode to actively communicate with the serving network. Alternatively, the UE may operate in an idle mode and camp on the serving system if active communication is not required by the UE.

The UE may operate in the idle mode and may camp on a serving cell on a first frequency. While in the idle mode, the UE may detect a femto cell on a second frequency that is different from the first frequency. The detected femto cell may have a CSG that includes the UE. A CSG identity (ID) of the detected femto cell may be in a whitelist of the UE. The UE may be required to reselect to this femto cell, regardless of cell reselection rules applicable for the current serving cell, if the detected femto cell is the strongest cell on the second frequency. This action may be specified by WCDMA standard, as defined in 3GPP TS 25.304. However, the femto cell may be the only cell on the second frequency and may be very weak. Reselecting to this femto cell may result in poor performance for the UE when it engages in a call.

The UE may perform cell reselection based on one or more suitability criteria, which may be defined to provide good performance. In WCDMA, suitability of a cell may be determined based on the following suitability parameters:

$$S_{qual} = Q_{qualmeas} - Q_{qualmin} , \quad \text{and} \qquad\qquad \text{Eq (1)}$$

$$Srxlev = Qrxlevmeas - Qrxlev\,min - Pcompensation \;, \qquad Eq\,(2)$$

where Qqualmeas is a measured quality value at a UE for a cell,
Qqualmin is a minimum required quality value for the cell,
Squal is a cell reselection quality value for the cell,
Qrxlevmeas is a measured received level at the UE for the cell,
Qrxlevmin is a minimum required received level for the cell,
Pcompensation is a correction factor, and
Srxlev is a cell reselection received level value for the cell.

Qqualmeas denotes a measured quality of a received signal at the UE and may be determined based on a pilot transmitted by a cell. For example, in WCDMA, Qqualmeas may be expressed as a received energy-per-chip divided by a power density in a band ($E_c/N_o$) of a Common Pilot Channel (CPICH) transmitted by a cell operating based on frequency division duplexing (FDD). The $E_c/N_o$ of the CPICH may be averaged to obtain a more reliable measured quality value for the cell.

Qrxlevmeas denotes a measured received signal level at the UE for a cell. For example, in WCDMA, Qrxlevmeas may be given by (i) a Received Signal Code Power (RSCP) of the CPICH transmitted by a cell operating based on FDD or (ii) an RSCP of a Primary Common Control Physical Channel (P-CCPCH) transmitted by a cell operating based on time division duplexing (TDD).

Pcompensation is a correction factor and may be given as:

$$Pcompensation = \max\left\{ UE\_TXPWR\_MAX\_RACH - P\_MAX, 0 \right\} \;, \qquad Eq\,(3)$$

where UE_TXPWR_MAX_RACH is a maximum transmit power of the UE for a Random Access Channel (RACH), and P_MAX is a maximum transmit power of the UE.

In equations (1) to (3), Qqualmeas and Qrxlevmeas may be measured by the UE for a cell. Qqualmin and Qrxlevmin are threshold values that may be broadcast by a wireless system, e.g., in System Information Block Type 3 (SIB3) in WCDMA. UE_TXPWR_MAX_RACH may also be broadcast by the wireless system. Qqualmeas, Qqualmin, Pcompensation, Squal and Srxlev may be given in units of decibels (dB). Qrxlevmeas, Qrxlevmin, UE_TXPWR_MAX_RACH and P_MAX may be given in units of dBm, which is a power ratio (in dB) of measured power relative to 1 milliwatt.

A cell may be deemed to be a suitable cell if both of the following suitability criteria are satisfied:

$$(Squal > 0) \quad AND \qquad Eq\,(4)$$

$$(Srxlev > 0)\,. \qquad Eq\,(5)$$

For the suitability criteria show in equations (4) and (5), a CPICH $E_c/I_o$ and RSCP of a cell have to be greater than applicable threshold values, which are configured by the wireless system, in order for the cell to be considered as a suitable cell and be eligible for reselection as a new serving cell of the UE. The suitability criteria may be applicable for cells in a neighbor cell list (NCL), which may be broadcast by the current serving cell of the UE.

The suitability criteria in equations (4) and (5) may be used to determine whether a macro cell is a suitable cell. The suitability criteria in equations (4) and (5) may also be used to determine whether a femto cell is a suitable cell. This may be achieved by placing the femto cell in a neighbor cell list of the serving cell, since the suitability criteria may be applicable for all cells in the neighbor cell list.

A wireless system may broadcast very low/conservative values for Qqualmin and Qrxlevmin. In this case, even though a femto cell satisfies the suitability criteria, a UE may experience poor performance for communication via the femto cell. Furthermore, the femto cell may not be included in a neighbor cell list, and it may not be clear what suitability criteria might be applicable for the femto cell. In this case, Qqualmin obtained from system information may be used to determine suitability of the femto cell.

In an aspect of the present disclosure, a UE may perform cell reselection to a cell (e.g., a femto cell or a cell of some other type) by applying one or more performance-based suitability criteria defined to provide good performance for the UE. This may ensure that the UE will reselect a good cell. Performance-based suitability criteria may be defined in various manners. In one design, a performance-based suitability criterion may be defined based on a target performance for one or more physical channels or signals to be received by the UE from the cell. This may ensure that the UE can obtain the target performance for the one or more physical channels or signals if the UE reselects to the cell. Performance-based suitability criteria may be defined in different manners for different wireless systems and different radio technologies.

In one design, a performance-based suitability criterion may be defined based on a target performance for a Page Indicator Channel (PICH). The PICH carries page indicators that may be set (e.g., to '1') whenever page messages are sent on a Paging Channel (PCH) to UEs.

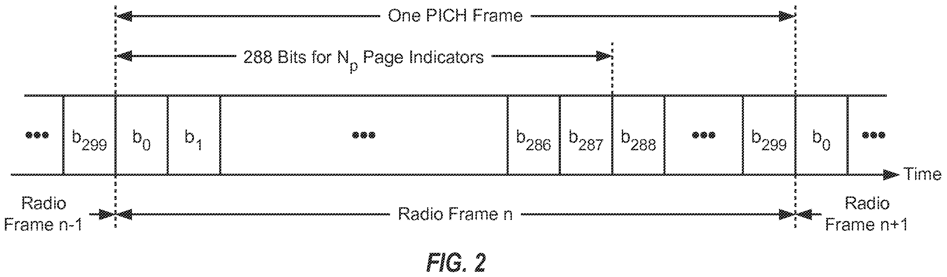

**FIG. 2** shows the format of the PICH in WCDMA. The transmission timeline is partitioned into units of radio frames. Each radio frame has a duration of 10 millisecond (ms) and is identified by a 12-bit system frame number (SFN). Each radio frame includes 15 slots, each slot covers 2560 chips, and each chip has a duration of 1/3.84 microseconds ($\mu$s).

A transmission on the PICH in one radio frame is referred to as a PICH frame. As shown in FIG. 2, a PICH frame includes 300 bits $b_0$ to $b_{299}$. The first 288 bits $b_0$ through $b_{287}$ are used for $N_p$ page indicators, and the last 12 bits are reserved for other uses. $N_p$ denotes the number of page indicators in one PICH subframe and is a configurable value. $N_p$ may be conveyed in SIB Type 5 (SIB5) and may be equal to 18, 36, 72 or 144. Each page indicator is sent in $288/N_p$ consecutive bits in one PICH frame, where $288/N_p$ may be equal to 16, 8, 4 or 2. The $288/N_p$ bits for a page indicator are all set (i) to '1' if the page indicator is equal to '1' or (ii) to '0' if the page indicator is equal to '0'. Each PICH frame is associated with a corresponding PCH frame that is delayed by three slots. Page messages may be sent to UEs by (i) setting the page indicators for these UEs in a PICH frame and (ii) sending the page messages to these UEs in the associated PCH frame three slots later. The PCH may be sent in a Secondary Common Control Physical Channel (S-CCPCH).

Other wireless systems, such as a CDMA IX system, may use similar concept of sending page indicators on one physical channel and page messages on another physical channel. The physical channels for page indicators and page messages may be referred to by other names in other wireless systems. The page indicators and page messages may also be sent in other manners.

A UE may register with a WCDMA system and may operate in the idle mode when the UE is not actively exchanging data with any cell in the WCDMA system. In the idle mode, the UE may periodically check its page indicator on the PICH to determine whether a page message might be sent on the PCH to the UE. If the page indicator for the UE is set, then the UE may process the PCH to check for any page message sent to the UE. The UE can detect the PICH more quickly and typically processes the PCH only if the PICH indicates that a page message might be sent to the UE.

In one design, a performance-based suitability criterion may be defined such that the UE can reliably detect the PICH with a target false alarm probability of $P_{FA-target}$, which may be the target performance for the PICH. The false alarm probability of $P_{FA-target}$ may be achieved with a certain minimum received signal quality for the PICH. Received signal quality may be quantified by signal-to-noise ratio (SNR) (as assumed in much of the description below) or by some other quantity or metric. The UE can achieve the target false alarm probability of $P_{FA-target}$ for the PICH if the SNR of the PICH is equal to or higher than the minimum SNR.

In general, a minimum SNR of a physical channel (e.g., a control channel or a data channel) may be dependent on various parameters of the physical channel. For example, the minimum SNR of the PICH may be dependent on a total-noise-plus interference-to-total-received-power ratio ($N_t/I_o$), the number of page indicators in one PICH subframe ($N_p$), and the target false alarm probability ($P_{FA-target}$) for the PICH.

The following terms are used in the description below:

$E_c$ - energy-per-chip for a physical channel (e.g., PICH) at a cell,
$E_p$ - energy-per-chip for a pilot channel (e.g., CPICH) at the cell,
$I_{or}$ - total transmit power spectral density of a downlink signal at the cell,
$I_{oc}$ - interference from other cells at the UE,
$I_o$ - total received power at the UE, $I_o = I_{oc} + I_{or}$,
$N_o$ - noise spectral density at the UE, and
$N_t$ - total noise and interference at the UE.

The UE may obtain $N_p$ by decoding SIB5 from a cell. If the UE has not decoded SIB5 and does not know $N_p$, then the UE may use a default value for $N_p$. In one design, a default value of 18 may be used for $N_p$. This default value may likely be used for a femto cell, which may serve few UEs and may thus have a small value for $N_p$. Using a default value of 18 for $N_p$ may also result in a more conservative performance-based suitability criterion for the PICH, which may be desirable in order to ensure that the target performance for the PICH can be achieved.

The false alarm probability for the PICH may be expressed as:

$$P_{FA} = Q\left(\sqrt{2 \cdot SNR_{PICH}}\right) , \quad \text{and} \qquad\qquad \text{Eq (6)}$$

$$Q(x) = \frac{1}{\sqrt{2\pi}} \int_x^\infty e^{-x^2/2} \, dx , \qquad\qquad \text{Eq (7)}$$

where $SNR_{PICH}$ is the SNR of the PICH, and

$P_{FA}$ is the false alarm probability for the PICH.

Equation (6) provides theoretical detection performance of the PICH in an additive white Gaussian noise (AWGN) channel with no receive diversity at the UE. The SNR of the PICH may be expressed as:

$$SNR_{PICH} = 256 \cdot \frac{144}{N_p} \cdot \left(\frac{E_c}{I_{or}}\right)_{PICH} \cdot G , \qquad\qquad \text{Eq (8)}$$

where $(E_c / I_{or})_{PICH}$ is energy-per-chip-to-total-transmit-power ratio of the PICH, and
G denotes geometry, or $G = I_{or} / I_{oc}$.

In equation (8), the factor 256 accounts for 256 chips per bit for the PICH, the factor $144/N_p$ accounts for the number of bits per page indicator, and $(E_c / I_{or})_{PICH} \cdot G$ is a per chip SNR. $E_c/I_{or}$ of the PICH may be lower than $E_c/I_{or}$ of the CPICH, e.g., by approximately 7 dB or some other amount. SNR of the PICH may be estimated based on (i) measured $E_c/I_{or}$ of the CPICH and (ii) an estimated difference between $E_c/I_{or}$ of the CPICH and $E_c/I_{or}$ of the PICH, as described below.

Geometry may be estimated in various manners. In one design, geometry may be estimated by assuming that $E_c/I_{or}$ of the CPICH is approximately -10 dB. A UE may determine $E_c/I_o$ of the CPICH after performing an autonomous search function (ASF) search and may compute geometry as $G = I_{or} / I_{oc} \approx N_t / I_{oc}$. However, $E_c/I_{or}$ of the CPICH may be different than an assumed $E_c/I_{or}$ of -10 dB, especially in the idle mode in which an Orthogonal Channel Noise Simulator (OCNS) is off. Error in the assumed $E_c/I_{or}$ of the CPICH may result in a corresponding error in geometry computed based on the assumed $E_c/I_{or}$ of the CPICH.

In another design, geometry may be estimated based on a weighted $N_t/I_o$, which may be defined to be equal to $(E_c/I_o)*(N_t/I_o)$. $E_c/I_o$ may be canceled from the weighted $N_t/I_o$ to obtain $N_t/I_o$. In this design, the SNR of the PICH may be expressed as:

$$SNR_{PICH} = 256 \cdot \frac{144}{N_p} \cdot \left[\left(\frac{E_c}{I_{or}}\right)_{CPICH} - 7\,dB\right] \cdot G , \qquad\qquad \text{Eq (9)}$$

$$G = \frac{I_{or}}{I_{oc}} , \quad \text{and} \qquad\qquad \text{Eq (10)}$$

$$N_t \approx I_{oc} . \qquad\qquad \text{Eq (11)}$$

Combining equations (9), (10) and (11), the SNR of the PICH may be expressed as:

$$SNR_{PICH} = 256 \cdot \frac{144}{N_p} \cdot \frac{E_p/I_o}{10^{0.7} \cdot N_t/I_o} . \qquad\qquad \text{Eq (12)}$$

The SNR of the PICH defined in equation (12) may be substituted for $SNR_{PICH}$ in equation (6). The false alarm probability of the PICH may then be a function of the number of page indicators in one PICH subframe ($N_p$), the $E_c/I_o$ of the CPICH, and $N_t/I_o$. A minimum SNR of the PICH, $SNR_{PICHmin}$, that can provide the target false alarm probability of the PICH may be expressed as:

$$SNR_{PICH\,min} = \frac{[Q^{-1}(P_{FA\text{-}target})]^2}{2} \; . \qquad\qquad Eq\ (13)$$

Combining equations (12) and (13), a minimum $E_c/I_o$ of the CPICH, $(E_p/I_o)_{min}$, that can provide the target false alarm probability of the PICH may be expressed as:

$$(E_p/I_o)_{min} = \frac{[Q^{-1}(P_{FA\text{-}target})]^2 \cdot N_p \cdot N_t/I_o \cdot 10^{0.7}}{2 \cdot 256 \cdot 144} = Qsnr\,min \; . \qquad Eq\ (14)$$

$(E_p/I_o)_{min}$ may also be referred to as Qsnrmin, $(E_p/I_o)_{target}$, etc.

A performance-based suitability parameter may be defined based on the measured $E_c/I_o$ of the CPICH (which may be referred to as Qsnrmeas) and the minimum $E_c/I_o$ of the CPICH (which may be referred to as Qsnrmin), as follows:

$$Ssnr = Qsnrmeas - Qsnr\,min \; , \qquad\qquad Eq\ (15)$$

where Qsnrmeas is a measured SNR of the CPICH from a cell,
Qsnrmin is a minimum required SNR of the CPICH from the cell, and
Ssnr is a cell reselection SNR for the cell.

A performance-based suitability criterion may be defined as follows:

$$(Ssnr > 0) \; . \qquad\qquad Eq\ (16)$$

The performance-based suitability criterion in equation (16) is effectively defined as the measured CPICH $E_c/I_o$ being greater than the minimum CPICH $E_c/I_o$.

In one design, the performance-based suitability criterion in equation (16) may be used to ascertain whether a cell is a suitable cell. A cell may be deemed as a suitable cell if it meets the suitability criteria defined by the wireless system in equations (4) and (5) as well as the performance-based suitability criterion in equation (16).

In another design, a minimum quality threshold value may be defined as follows:

$$Q\,min = max\{Qqual\,min, Qsnr\,min\} \; . \qquad\qquad Eq\ (17)$$

A suitability parameter and a suitability criterion may then be defined based on the minimum quality, Qmin, as follows:

$$Squal = Qqualmeas - Q\,min \; , \quad and \qquad\qquad Eq\ (18)$$

$$(Squal > 0) \; . \qquad\qquad Eq\ (19)$$

A cell may be deemed as a suitable cell if it meets the suitability criterion defined by the wireless system in equation (2) as well as the performance-based suitability criterion in equation (19).

For clarity, a performance-based suitability criterion defined based on a target false alarm probability for the PICH has been described above. In general, a performance-based suitability criterion may be defined for any physical channel to be received by a UE. For example, a performance-based suitability criterion may be defined for a broadcast channel, a paging channel, a control channel, a data channel, etc. Furthermore, a performance-based suitability criterion may be defined based on any performance metric such as false alarm probability, detection probability, decoding probability, etc. Different physical channels may carry different types of information, and different performance metrics may be applicable for different types of information.

For clarity, a single performance-based suitability criterion defined based on a target false alarm probability for the PICH has been described above. In general, any number of performance-based suitability criteria may be defined for any number of physical channels to be received by a UE and any number of performance metrics. One or more performance-based suitability criteria may be defined for a cell such that the UE can obtain good performance if the UE performs reselection to the cell. For example, a first performance-based suitability criterion may be defined based on a target false alarm probability for the PICH, a second performance-based suitability criterion may be defined based on a target decoding probability for the PCH, etc.

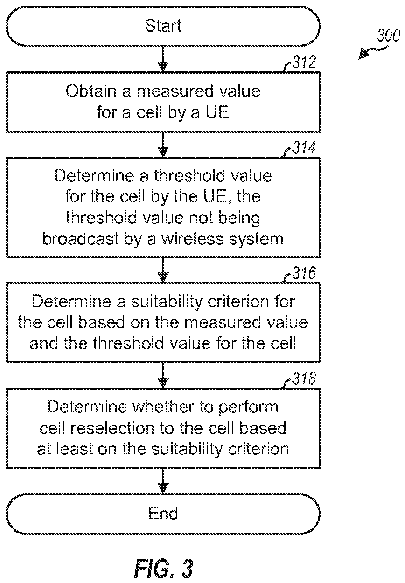

**FIG. 3** shows a design of a process 300 for performing cell reselection. Process 300 may be performed by a UE (as described below) or by some other entity. The UE may obtain a measured value for a cell (block 312). The UE may also determine a threshold value for the cell (block 314). The threshold value is not broadcast by a wireless system and may be determined by the UE independent of the wireless system. The UE may determine a suitability criterion for the cell based on the measured value and the threshold value for the cell (block 316). The UE may determine whether the cell is a suitable cell and may also determine whether to perform cell reselection to the cell based at least on the suitability criterion (block 318). The cell may be a femto cell supporting communication for at least one UE in a CSG. The cell may also be a macro cell, a pico cell, a small cell, or a cell of some other type.

In one design of block 314, the UE may determine the threshold value based on a target performance for a physical channel received by the UE. For example, the UE may determine the threshold value based on a target false alarm probability for the PICH. In one design, the measured value and the threshold value may be determined for a pilot channel based on the target performance for the physical channel received by the UE. In another design, the measured value and the threshold value may be determined for the physical channel received by the UE.

In one design, the UE may measure the received signal quality of the pilot channel (e.g., CPICH), which may correspond to the measured value for the cell. The UE may also determine a minimum received signal quality for the pilot channel, which may correspond to the threshold value for the cell, e.g., as shown in equation (14). The UE may determine the suitability criterion for the cell based on the measured received signal quality of the pilot channel and the minimum received signal quality for the pilot channel, e.g., as shown in equation (16).

The UE may determine the minimum received signal quality for the pilot channel based on at least one parameter for the physical channel received by the UE. The at least one parameter for the physical channel may comprise (i) a difference between the transmit power of the pilot channel and the transmit power of the physical channel received by the UE, (ii) an estimated geometry of the UE for the cell, and/or (iii) other parameters for the physical channel. The physical channel may comprise the PICH. The at least one parameter may comprise a target false alarm probability for the PICH, the number of bits for a page indicator sent on the PICH, etc. The UE may determine the number of bits for a page indicator based on (i) the fewest number of page indicators sent on the PICH in one radio frame or (ii) system information received from the wireless system.

In another design, the UE may determine a minimum received signal quality for the pilot channel (e.g., Qsnrmin) to obtain the target performance for the physical channel received by the UE, e.g., as shown in equation (14). The UE may determine a minimum required quality level (e.g., Qqualmin) for the cell from system information received from the cell. The UE may determine the threshold value (e.g., Qmin) based on the greater of the minimum received signal quality for the pilot channel and the minimum required quality level for the cell, e.g., as shown in equation (17). The UE may then determine the suitability criterion for the cell based on the threshold value, e.g., as shown in equations (18) and (19).

In one design, the UE may receive at least one threshold value broadcast by the wireless system. The at least one threshold value may include a second threshold value corresponding to a minimum required quality level (e.g., Qqualmin) for the cell and/or a third threshold value corresponding to a minimum required received level (e.g., Qrxlevmin) for the cell. The UE may determine at least one additional suitability criterion for the cell based on the at least one threshold value broadcast by the wireless system, e.g., as shown in equation (4) and/or (5). The UE may then determine whether to perform cell reselection to the cell based further on the at least one additional suitability criterion.

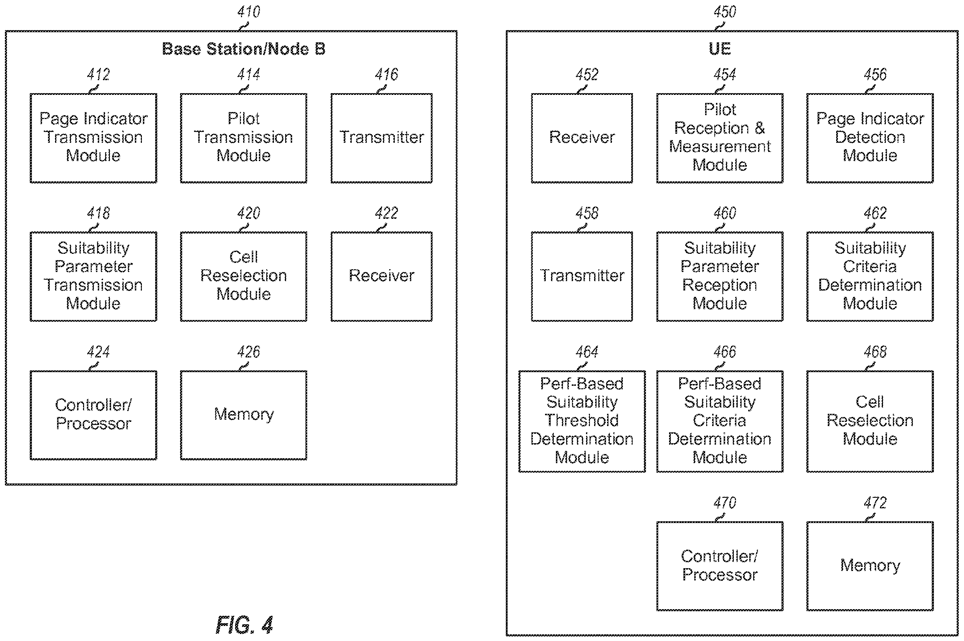

**FIG. 4** shows a block diagram of a base station/Node B 410 and a UE 450. Base station 410 may correspond to any of Node Bs 110 to 116 in FIG. 1. UE 450 may correspond to any of UEs 130 to 136 in FIG. 1.

At base station 410, a module 412 may generate and transmit page indicators (e.g., on the PICH) to UEs in idle mode. A module 414 may generate and transmit a pilot channel (e.g., the CPICH) on the downlink. A module 418 may determine and send suitability parameters for cell reselection. The suitability parameters may include Qqualmin, Qrxlevmin, and/or other threshold values used by UEs to determine suitability for cell reselection. A module 420 may perform cell reselection for UEs. For example, module 420 may perform or facilitate handover of UEs that reselect to a cell served by base station 410. A transmitter 416 may generate a downlink signal comprising page indicators, pilot channel, system information, control information, and data for UEs. A receiver 422 may receive uplink signals comprising control information and data sent by UEs. The various modules within base station 410 may operate as described above. A controller/processor 424 may direct the operation of various modules within base station 410. A memory 426 may store data and program codes for base station 410.

At UE 450, a module 454 may receive pilot channels (e.g., the CPICH) from base station 410 and/or other base stations and may make measurements for received pilot channels. Module 454 may determine the SNR of the pilot channels and/or other physical channels from cells. A module 456 may detect page indicators (e.g., sent on the PICH) applicable for UE 450. A module 460 may receive suitability parameters from base station 410 and/or other base stations. A module 462 may determine suitability criteria for cell reselection based on the received suitability parameters, e.g., as shown in equations (4) and (5). A module 464 may determine one or more performance-based (perf-based) suitability threshold values. For example, module 464 may determine a performance-based suitability threshold value based on the target performance and other parameters of the PICH and the SNR of the pilot, e.g., as shown in equation (14). A module 466 may determine one or more performance-based suitability criteria based on one or more measured values and one or more performance-based suitability threshold values. For example, module 466 may determine a performance-based suitability criterion based on the measured SNR of the pilot channel and a performance-based suitability threshold value for the pilot channel, e.g., as shown in equations (15) and (16). A module 468 may perform cell reselection for UE 450 based on (i) one or more suitability criteria determined based on one or more suitability threshold values and (ii) one or more performance-based suitability criteria determined based on one or more performance-based suitability threshold values. Module 468 may determine whether a cell is a suitable cell based on the suitability criteria and may reselect to a suitable cell that is better than a serving cell of UE 450. A receiver 452 may receive downlink signals from base station 450 and/or other base stations. A transmitter 458 may generate an uplink signal comprising control information and data sent by UE 450. The various modules within UE 450 may operate as described above. A controller/processor 470 may direct the operation of various modules within UE 410. A memory 472 may store data and program codes for UE 450.

The modules in FIG. 4 may comprise processors, electronic devices, hardware devices, electronic components, logical circuits, memories, software codes, firmware codes, etc., or any combination thereof.

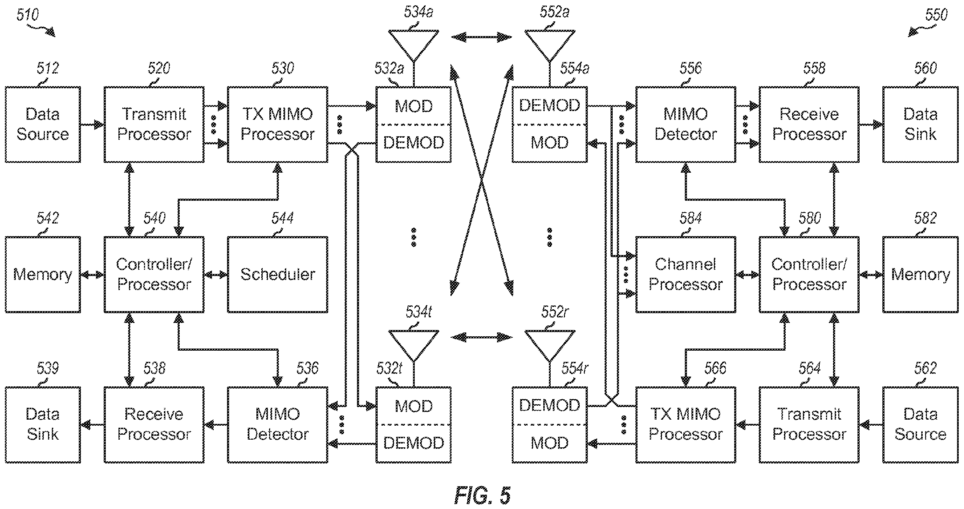

**FIG. 5** shows a block diagram of a design of a base station/Node B 510 and a UE 550. Base station 510 may correspond to any of Node Bs 110 to 116 in FIG. 1. UE 550 may correspond to any of UEs 130 to 136 in FIG. 1. Base station 510 may be equipped with T antennas 534a through 534t, and UE 550 may be equipped with R antennas 552a through 552r, where in general $T \geq 1$ and $R \geq 1$.

At base station 510, a transmit processor 520 may receive data from a data source 512 for transmission to one or more UEs, process (e.g., encode and modulate) the data for each UE based on one or more modulation and coding schemes selected for that UE, and provide data symbols for all UEs. Transmit processor 520 may also process system information and control information and provide control symbols. The system information may include suitability parameters, suitability threshold values, etc. Processor 520 may also generate pilot symbols for a pilot channel, e.g., the CPICH. A transmit (TX) multiple-input multiple-output (MIMO) processor 530 may precode the data symbols, the control symbols, and/or the pilot symbols (if applicable) and may provide T output symbol streams to T modulators (MOD) 532a through 532t. Each modulator 532 may process its output symbol stream (e.g., for OFDM, etc.) to obtain an output sample stream. Each modulator 532 may further condition (e.g., convert to analog, amplify, filter, and upconvert) its output sample stream to obtain a downlink signal. T downlink signals from modulators 532a through 532t may be transmitted via T antennas 534a through 534t, respectively.

At UE 550, antennas 552a through 552r may receive the downlink signals from base station 510 and/or other base stations and may provide received signals to demodulators (DEMODs) 554a through 554r, respectively. Each demodulator 554 may condition (e.g., filter, amplify, downconvert, and digitize) its received signal to obtain input samples. Each demodulator 554 may further process the input samples (e.g., for OFDM, etc.) to obtain received symbols. A MIMO detector 556 may obtain received symbols from all R demodulators 554a through 554r, perform MIMO detection on the received symbols, and provide detected symbols. A receive processor 558 may process (e.g., demodulate and decode) the detected symbols to obtain decoded data, control information, and system information. Receive processor 558 may provide decoded data for UE 550 to a data sink 560 and provide decoded control information and system information to a controller/processor 580. A channel processor 584 may measure received signal quality, received signal level, and/or other metrics of pilot channel and/or other physical channels. Controller 580 may determine suitability criteria for cells based on the measured received signal quality, received signal level, and/or other metrics as well as the suitability threshold values. Controller 580 may also perform cell reselection based on the suitability criteria.

On the uplink, at UE 550, a transmit processor 564 may receive and process data from a data source 562 and control information (e.g., cell reselection decisions) from controller/processor 580. Processor 564 may also generate pilot symbols for a pilot channel. The symbols from transmit processor 564 may be precoded by a TX MIMO processor 566 if applicable, further processed by modulators 554a through 554r (e.g., for SC-FDM, OFDM, etc.), and transmitted to base station 510. At base station 510, the uplink signals from UE 550 and other UEs may be received by antennas 534, processed by demodulators 532, detected by a MIMO detector 536 if applicable, and further processed by a receive processor 538 to obtain decoded data and control information sent by UE 550 and other UEs. Processor 538 may provide the decoded data to a data sink 539 and the decoded control information to controller/processor 540.

Controllers/processors 540 and 580 may direct the operation at base station 510 and UE 550, respectively. Processor 580 and/or other processors and modules at UE 550 may perform or direct process 300 in FIG. 3 and/or other processes for the techniques described herein. Memories 542 and 582 may store data and program codes for base station 510 and UE 550, respectively. A scheduler 544 may schedule UEs for data transmission on the downlink and/or uplink.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that the various illustrative logical blocks, modules, circuits, and algorithm steps described in connection with the disclosure herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

The various illustrative logical blocks, modules, and circuits described in connection with the disclosure herein may be implemented or performed with a general-purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the disclosure herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

In one or more exemplary designs, the functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a general purpose or special purpose computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code means in the form of instructions or data structures and that can be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where disks usually reproduce data magnetically, while discs reproduce data optically with lasers. Combinations of the above should also be included within the scope of computer- readable media.

The previous description of the disclosure is provided to enable any person skilled in the art to make or use the disclosure. Various modifications to the disclosure will be readily apparent to those skilled in the art, and the generic principles defined herein may be applied to other variations without departing from the scope of the disclosure. Thus, the disclosure is not intended to be limited to the examples and designs described herein but is to be accorded the widest scope consistent with appended claims.

**Claims**

1.  A method (300) for wireless communication, the method being performed by a user equipment, UE, and comprising:

    obtaining (312) a measured value for a pilot channel from a cell;
    determining (314) a threshold value for the pilot channel, the threshold value not being broadcast by the cell;
    determining (316) a suitability criterion for the cell based on the measured value and the threshold value for the cell;
    determining (318) whether the suitability criterion is met; and
    performing cell reselection to the cell in response to determining that the suitability criterion is met;
    **characterized in that** the threshold value is determined based on a target performance to be achieved for a physical channel other than the pilot channel.

2.  The method (300) of claim 1, wherein the measured value and the threshold value are based at least in part on an energy-per-chip, $E_c$, for the physical channel at the cell and a total received power, $I_o$, at the UE.

3.  The method (300) of claim 1, wherein the target performance to be achieved for the physical channel is a target false alarm probability to be achieved for a Page Indicator Channel, PICH.

4.  The method (300) of claim 1,
    wherein the obtaining (312) the measured value comprises measuring received signal quality of a pilot channel, the measured received signal quality of the pilot channel corresponding to the measured value for the cell,
    wherein the determining (314) the threshold value comprises determining a minimum received signal quality for the pilot channel, the minimum received signal quality for the pilot channel corresponding to the threshold value for the cell, and
    wherein the determining the suitability criterion for the cell comprises determining the suitability criterion for the cell based on the measured received signal quality of the pilot channel and the minimum received signal quality for the pilot channel.

5.  The method (300) of claim 4, wherein the determining (314) the minimum received signal quality for the pilot channel comprises determining the minimum received signal quality for the pilot channel based on at least one parameter for the physical channel.

6.  The method (300) of claim 4, wherein the at least one parameter for the physical channel comprises a difference between transmit power of the pilot channel and transmit power of the physical channel.

7.  The method of claim 4, wherein the at least one parameter for the physical channel comprises an estimated geometry of the UE for the cell.

8.  The method (300) of claim 5, wherein the physical channel comprises a Page Indicator Channel, PICH.

9.  The method (300) of claims 6 and 8 , wherein the at least one parameter for the physical channel comprises a target false alarm probability for the PICH or a number of bits for a page indicator sent on the PICH.

10. The method (300) of claim 9, further comprising:

    determining the number of bits for a page indicator based on a fewest number of page indicators sent on the PICH in one radio frame.

11. The method (300) of claim 1, further comprising:

    receiving at least one additional threshold value broadcast by the cell;
    determining at least one additional suitability criterion for the cell based on the at least one additional threshold value; and
    determining whether to perform cell reselection to the cell based further on the at least one additional suitability criterion.

12. The method (300) of claim 11, wherein the at least one additional threshold value broadcast by the cell includes a minimum required quality level for the cell or a minimum required received level for the cell, or both.

13. The method (300) of claim 1, wherein the cell comprises a femto cell supporting communication for at least one UE in a Closed Subscriber Group, CSG.

14. A user equipment, UE, comprising means for performing the method of any of claims 1 to 13.

15. A computer program product, comprising a non-transitory computer-readable medium comprising code for causing a user equipment, UE, to perform the method of any of claims 1 to 13.

**Patentansprüche**

1. Ein Verfahren (300) zur Drahtloskommunikation, wobei das Verfahren durch eine Nutzereinrichtung bzw. UE (= user equipment) durchgeführt wird und Folgendes aufweist:

   Erlangen (312) eines gemessenen Wertes für einen Pilotkanal von einer Zelle;
   Bestimmen (314) eines Schwellenwertes für den Pilotkanal, wobei der Schwellenwert nicht durch die Zelle gebroadcasted bzw. ausgestrahlt wird;
   Bestimmen (316) eines Eignungskriteriums für die Zelle basierend auf dem gemessenen Wert und dem Schwellenwert für die Zelle;
   Bestimmen (318) ob das Eignungskriteriums erfüllt ist; und
   Durchführen von Zellneuauswahl der Zelle ansprechend auf Bestimmen, dass das Eignungskriterium erfüllt ist;
   **dadurch gekennzeichnet, dass** der Schwellenwert bestimmt wird basierend auf einer Zielperformance, die für einen physikalischen Kanal, der nicht der Pilotkanal ist, erreicht werden soll.

2. Verfahren (300) nach Anspruch 1, wobei der gemessene Wert und der Schwellenwert teilweise auf einer Energie-pro-Chip $E_c$ für den physikalischen Kanal an der Zelle und einer empfangenen Gesamtleistung $I_o$ an der UE basieren.

3. Verfahren (300) nach Anspruch 1, wobei die Zielperformance, die für den physikalischen Kanal erreicht werden soll, eine Zielwahrscheinlichkeit eines falschen Alarms ist, die für einen PICH (PICH = Page Indicator Channel bzw. Funkrufindikatorkanal) erreicht werden soll.

4. Verfahren (300) nach Anspruch 1,
   wobei das Erlangen (312) des gemessenen Wertes Messen einer empfangenen Signalqualität eines Pilotkanals aufweist, wobei die gemessene empfangenen Signalqualität des Pilotkanals dem gemessenen Wert für die Zelle entspricht,
   wobei das Bestimmen (314) des Schwellenwertes Bestimmen einer minimalen empfangenen Signalqualität für den Pilotkanal aufweist, wobei die minimale empfangenen Signalqualität für den Pilotkanal dem Schwellenwert für die Zelle entspricht, und
   wobei das Bestimmen des Eignungskriteriums für die Zelle Bestimmen des Eignungskriteriums für die Zelle basierend auf der gemessenen empfangenen Signalqualität des Pilotkanals und der minimalen empfangenen Signalqualität für den Pilotkanal aufweist.

5. Verfahren (300) nach Anspruch 4, wobei das Bestimmen (314) der minimalen empfangenen Signalqualität für den Pilotkanal Bestimmen der minimalen empfangenen Signalqualität für den Pilotkanal basierend auf wenigstens einem Parameter für den physikalischen Kanal aufweist.

6. Verfahren (300) nach Anspruch 4, wobei der wenigstens eine Parameter für den physikalischen Kanal eine Differenz zwischen einer Sendeleistung des Pilotkanals und einer Sendeleistung des physikalischen Kanals aufweist.

7. Verfahren nach Anspruch 4, wobei der wenigstens eine Parameter für den physikalischen Kanal eine geschätzte Geometrie der UE für die Zelle aufweist.

8. Verfahren (300) nach Anspruch 5, wobei der physikalische Kanal einen PICH (PICH = Page Indicator Channel) aufweist.

9. Verfahren (300) nach Ansprüchen 6 und 8, wobei der wenigstens eine Parameter für den physikalischen Kanal eine Wahrscheinlichkeit eines falschen Alarms für den PICH oder eine Anzahl von Bits für einen Page- bzw. Funkrufindikator, der auf dem PICH gesendet wird, aufweist.

10. Verfahren (300) nach Anspruch 9, das weiter Folgendes aufweist:

Bestimmen der Anzahl von Bits für einen Page- bzw. Funkrufindikator basierend auf einer geringsten Anzahl von Page-Indikatoren, die auf dem PICH in einem Funkrahmen gesendet werden.

11. Verfahren (300) nach Anspruch 1, das weiter Folgendes aufweist:

Empfangen wenigstens eines zusätzlichen Schwellenwertes, der durch die Zelle gebroadcasted bzw. ausgestrahlt wird;
Bestimmen wenigstens eines zusätzlichen Eignungskriteriums für die Zelle basierend auf dem wenigstens einen zusätzlichen Schwellenwert; und
Bestimmen, ob eine Zellneuauswahl zu der Zelle durchgeführt werden soll basierend weiter auf dem wenigstens einen zusätzlichen Eignungskriterium.

12. Verfahren (300) nach Anspruch 11, wobei der wenigstens eine zusätzliche Schwellenwert, der durch die Zelle gebroadcasted bzw. ausgestrahlt wird, einen minimalen erforderlichen Qualitätspegel für die Zelle oder einen minimalen erforderlichen empfangenen Pegel für die Zelle oder beides beinhaltet.

13. Verfahren (300) nach Anspruch 1, wobei die Zelle eine Femto-Zelle aufweist, die Kommunikation für wenigstens eine UE in einer geschlossenen Teilnehmergruppe bzw. CSG (CSG = Closed Subscriber Group) unterstützt.

14. Eine Nutzereinrichtung bzw. UE (UE = user equipment), die Mittel aufweist zum Durchführen des Verfahrens nach einem der Ansprüche 1 bis 13.

15. Ein Computerprogrammprodukt, dass ein nicht transitorisches computerlesbares Medium aufweist, dass Code aufweist um eine Nutzereinrichtung bzw. UE (UE = user equipment) zu veranlassen, das Verfahren nach einem der Ansprüche 1 bis 13 durchzuführen.

## Revendications

1. Un procédé (300) de communication sans fil, le procédé étant exécuté par un équipement d'utilisateur, UE, et comprenant :

l'obtention (312) d'une valeur mesurée pour un canal pilote à partir d'une cellule,
la détermination (314) d'une valeur seuil pour le canal pilote, la valeur seuil n'étant pas radiodiffusée par la cellule,
la détermination (316) d'un critère d'adéquation pour la cellule en fonction de la valeur mesurée et de la valeur seuil pour la cellule,
la détermination (318) si le critère d'adéquation est satisfait, et
l'exécution d'une resélection de cellule vers la cellule en réponse à la détermination que le critère d'adéquation est satisfait,
**caractérisé en ce que** la valeur seuil est déterminée en fonction d'une performance cible à atteindre pour un canal physique autre que le canal pilote.

2. Le procédé (300) selon la Revendication 1, où la valeur mesurée et la valeur seuil sont basées au moins en partie sur une énergie-par-puce, $E_c$, pour le canal physique au niveau de la cellule et une puissance reçue totale, $I_o$, au niveau de l'UE.

3. Le procédé (300) selon la Revendication 1, où la performance cible à atteindre pour le canal physique est une probabilité de fausse alarme cible à atteindre pour un canal indicateur de message de radiomessagerie, PICH.

4. Le procédé (300) selon la Revendication 1,
où l'obtention (312) de la valeur mesurée comprend la mesure d'une qualité de signal reçue d'un canal pilote, la qualité de signal reçue mesurée du canal pilote correspondant à la valeur mesurée pour la cellule,
où la détermination (314) de la valeur seuil comprend la détermination d'une qualité de signal reçue minimale pour le canal pilote, la qualité de signal reçue minimale pour le canal pilote correspondant à la valeur seuil pour la cellule, et où la détermination du critère d'adéquation pour la cellule comprend la détermination du critère d'adéquation pour la cellule en fonction de la qualité de signal reçue mesurée du canal pilote et de la qualité de signal reçue minimale pour le canal pilote.

5. Le procédé (300) selon la Revendication 4, où la détermination (314) de la qualité de signal reçue minimale pour le canal pilote comprend la détermination de la qualité de signal reçue minimale pour le canal pilote en fonction d'au moins un paramètre pour le canal physique.

6. Le procédé (300) selon la Revendication 4, où le au moins un paramètre pour le canal physique comprend une différence entre une puissance de transmission du canal pilote et une puissance de transmission du canal physique.

7. Le procédé selon la Revendication 4, où le au moins un paramètre pour le canal physique comprend une géométrie estimée de l'UE pour la cellule.

8. Le procédé (300) selon la Revendication 5, où le canal physique comprend un canal indicateur de message de radiomessagerie, PICH.

9. Le procédé (300) selon les Revendications 6 et 8, où le au moins un paramètre pour le canal physique comprend une probabilité de fausse alarme cible pour le PICH ou un nombre de bits pour un indicateur de message de radiomessagerie envoyé sur le PICH.

10. Le procédé (300) selon la Revendication 9, comprenant en outre :

la détermination du nombre de bits pour un indicateur de message de radiomessagerie en fonction d'un nombre le plus faible d'indicateurs de message de radiomessagerie envoyés sur le PICH dans une trame radio.

11. Le procédé (300) selon la Revendication 1, comprenant en outre :

la réception d'au moins une valeur seuil additionnelle radiodiffusée par la cellule,
la détermination d'au moins un critère d'adéquation additionnel pour la cellule en fonction de la au moins une valeur seuil additionnelle, et
la détermination s'il convient d'exécuter une resélection de cellule vers la cellule en fonction en outre du au moins un critère d'adéquation additionnel.

12. Le procédé (300) selon la Revendication 11, où la au moins une valeur seuil additionnelle radiodiffusée par la cellule comprend un niveau de qualité requis minimal pour la cellule ou un niveau reçu requis minimal pour la cellule, ou les deux.

13. Le procédé (300) selon la Revendication 1, où la cellule comprend une femtocellule prenant en charge une communication pour au moins un UE dans un groupe d'abonnés fermé, CSG.

14. Un équipement d'utilisateur, UE, comprenant un moyen d'exécution du procédé selon l'une quelconque des Revendications 1 à 13.

15. Un produit de programme informatique, comprenant un support lisible par ordinateur non transitoire contenant du code destiné à amener un équipement d'utilisateur, UE, à exécuter le procédé selon l'une quelconque des Revendications 1 à 13.

**FIG. 1**

EP 2 974 467 B1

One PICH Frame

288 Bits for $N_p$ Page Indicators

$\cdots$ | $b_{299}$ | $b_0$ | $b_1$ | $\cdots$ | $b_{286}$ | $b_{287}$ | $b_{288}$ | $\cdots$ | $b_{299}$ | $b_0$ | $\cdots$

Time

Radio Frame n-1

Radio Frame n

Radio Frame n+1

*FIG. 2*

EP 2 974 467 B1

*300*

Start

*312*

Obtain a measured value
for a cell by a UE

*314*

Determine a threshold value
for the cell by the UE, the
threshold value not being
broadcast by a wireless system

*316*

Determine a suitability criterion for
the cell based on the measured value
and the threshold value for the cell

*318*

Determine whether to perform
cell reselection to the cell based
at least on the suitability criterion

End

*FIG. 3*

*410*

## Base Station/Node B

*412*

Page Indicator
Transmission
Module

*414*

Pilot
Transmission
Module

*416*

Transmitter

*418*

Suitability
Parameter
Transmission
Module

*420*

Cell
Reselection
Module

*422*

Receiver

*424*

Controller/
Processor

*426*

Memory

*450*

## UE

*452*

Receiver

*454*

Pilot
Reception &
Measurement
Module

*456*

Page Indicator
Detection
Module

*458*

Transmitter

*460*

Suitability
Parameter
Reception
Module

*462*

Suitability
Criteria
Determination
Module

*464*

Perf-Based
Suitability
Threshold
Determination
Module

*466*

Perf-Based
Suitability
Criteria
Determination
Module

*468*

Cell
Reselection
Module

*470*

Controller/
Processor

*472*

Memory

*FIG. 4*

EP 2 974 467 B1

*FIG. 5*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6195551 B1

- EP 2302970 A1